# EUROPEAN PATENT APPLICATION

(11) **EP 2 036 911 A1**
(43) Date of publication of application: **18.03.2009**
(21) Application number: 06766555.4
(22) Date of filing: 09.06.2006
(51) Int. Cl.: C07F 9/12, C08G 59/30

(54) **PROCESS FOR PRODUCTION OF AMINATED PHOSPHORIC ACID ESTER COMPOUND, FLAME-RETARDANT RESIN, AND FLAME-RETARDANT RESIN COMPOSITION**

(71) Applicant: SHOWA HIGHPOLYMER CO., LTD., Tokyo 105-0012 (JP)
(72) Inventor: KAMATA, Hirotoshi, Isesaki-shi, Gunma 372-0833 (JP); TAKAHASHI, Kentarou, Isesaki-shi, Gunma 372-0833 (JP); LI, Hui, Isesaki-shi, Gunma 372-0833 (JP); IONIN, Boris, St. Petersburg 199406 (RU)
(74) Representative: HOFFMANN EITLE
(86) International application number: PCT/JP2006/311643
(87) International publication number: WO 2007/141877

(57) **Abstract**

The present invention relates to a method for producing an amino group-containing phosphate compound, by which the compound can be easily synthesized through a one-step reaction. The method for producing an amino group-containing phosphate compound comprises reacting an aminophenol compound represented by the general formula (1) 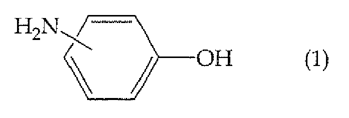 with a dichlorophosphoric acid compound represented by the general formula (2): 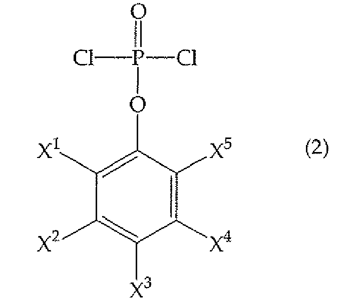 (where X¹, X², X³, X⁴ and X⁵ each represent a hydrogen atom or an alkyl group having 1 to 3 carbon atoms) in the presence of an inorganic basic compound in an aprotic organic solvent, to obtain a amino group-containing phosphate compound represented by the following general formula (3) 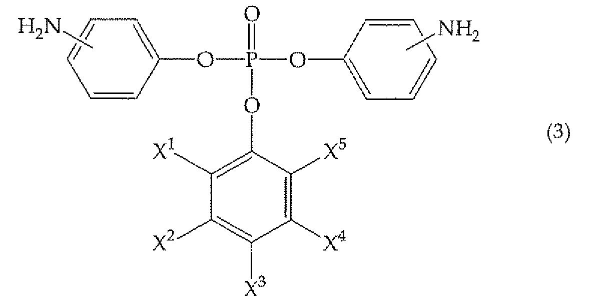 where X¹, X², X³, X⁴ and X⁵ are defined in the same way as in the general formula (2).

## Description

### Technical Field

The present invention relates to a method for producing an amino group-containing phosphate compound, and a flame-retardant resin and flame-retardant resin composition. More specifically, the present invention relates to a method for producing an amino group-containing phosphate compound, which is employed in producing electronic materials such as printed wiring boards, a solder resist, sealing materials, and interlayer insulators, electrical apparatus housings, and FRP and the like which are used in building structural materials, vehicles, and the like, and to a flame-retardant resin and a flame-retardant resin composition.

### Background Art

Conventionally, in the case of imparting flame retardancy to a resin composition which contains a thermosetting resin (such as an epoxy resin, an unsaturated polyester resin, a phenol resin, or a melamine resin) and a thermoplastic resin (such as an ABS resin, an AS resin, a PET resin, a PBT resin, or a PMMA resin), organic halides have been blended therein as a flame retardant. While resin compositions containing organic halides have excellent flame retardancy, there is a problem in that extremely-poisonous dioxins adversely affecting the environment are generated when the resin composition is heated for molding and burned after use. Therefore, it has been proposed to blend a phosphate compound such as trialkyl phosphate or triaryl phosphate and red phosphorous into the resin composition as a flame retardant instead of an organic halide.

However, in the case of blending a phosphate compound into a resin composition, the phosphate is liable to generate free phosphate ions resulting from hydrolysis, resulting in deterioration of electric characteristics of a cured product. Therefore, it has been proposed to use an aromatic condensed-type phosphate as a flame retardant for preventing the hydrolysis (for example, Patent Documents 1 and 2).
However, a large blending amount of the aromatic condensed-type phosphate causes bleed out in the cured product, resulting in the problem of limitations on the amount of use.
Further, a resin composition containing red phosphorus generates phosphine which is toxic to humans when the resin composition is burned after use. In view of the foregoing, a method for covering red phosphorus with a thermosetting resin and a method for covering red phosphorous with an electroless deposition have been proposed (for example, Patent Documents 3 and 4).
However, even with such methods, the above problems could not been solved completely.

On the other hand, it has been disclosed that various diamine compounds are used as a resin material in an epoxy resin and a urethane resin. For example, Patent Document 5 discloses use of a diamine compound represented by the following general formula as a resin material.

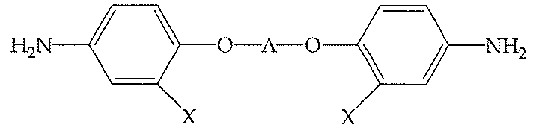

In the above formula, X represents a chlorine atom, a bromine atom, or a completely-halogenated alkyl group, A represents a divalent aromatic moiety or a halogenated aromatic moiety. The diamine compound has no phosphorous atom in A moiety. A resin prepared by using the diamine compound is used as an optical material, but is insufficient in flame retardancy.
In addition, Non-Patent Document 1 discloses that a flame-retardant resin can be obtained by using, as a resin material, an amino group-containing phosphate compound represented by the following formula.

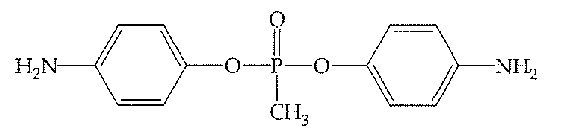

The amino group-containing phosphate compound is produced by the following two steps: (1) p-nitrophenol and methyl dichlorophosphoric acid are reacted in the presence of triethyl amine to thereby obtain bis(4-nitrophenyl)methyl phosphonate (83% yield); and (2) the nitro group is reduced to an amino group by using Pd/C catalyst in methanol to thereby obtain bis(4-aminophenyl)methyl phosphonate (86% yield).

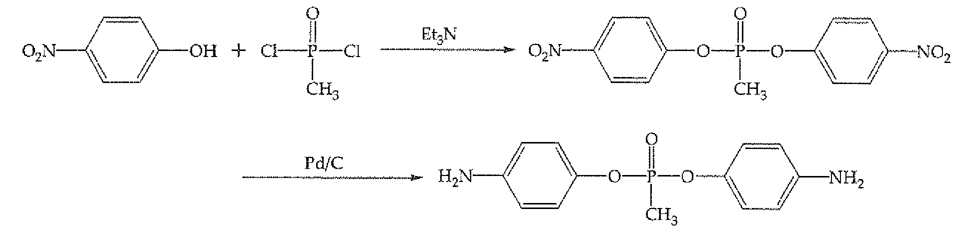

In the case of using the amino group-containing phosphate compound industrially, synthesis through a one-step reaction is preferred from the viewpoints of production efficiency, cost, and the like. However, a method for synthesizing the amino group-containing phosphate compound has not been developed.

Patent Document 1: JP 05-1079 A
Patent Document 2: JP 08-277344 A
Patent Document 3: JP 05-51623 B
Patent Document 4: JP 06-87606 A
Patent Document 5: US 6,891,067
Non-Patent Document 1: C.M. Thompson, and 4 others, "FLAME RETARDANT EPOXY RESINS" May 16, 2004, NASA Langley Technical Library Digital Repository, Internet <URL: http://techreports.larc.nasa.gov/Itrs/PDF/2004/mtg/NASA-2004-sampe-cmt.pdf>

### Disclosure of the Invention

### Problems to be solved by the Invention

Accordingly, the present invention has been made in view of solving the above-mentioned problems, and an object of the present invention is to provide a method for producing an amino group-containing phosphate compound, by which the compound can be easily synthesized through a one-step reaction.
In addition, another object of the present invention is to provide a flame-retardant resin and a flame-retardant resin composition which give a cured product having excellent flame retardancy and electric characteristics and do not generate dioxin and phosphine when the flame-retardant resin and the flame-retardant resin composition are heated for molding or burned after use.

### Means for solving the Problems

The present invention provides a method for producing an amino group-containing phosphate compound comprising reacting an aminophenol compound represented by the following general formula (1)

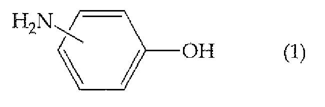

with a dichlorophosphoric acid compound represented by the following general formula (2)

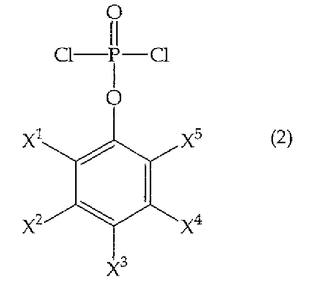

(where X¹, X², X³, X⁴, and X⁵ may be identical to or different from one another and each represent a hydrogen atom or an alkyl group having 1 to 3 carbon atoms) in the presence of an inorganic basic compound in an aprotic organic solvent, to obtain an amino group-containing phosphate compound represented by the following general formula (3)

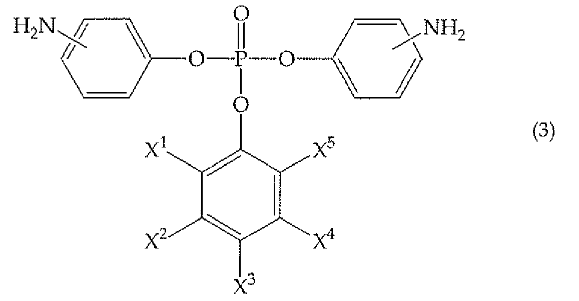

(where X¹, X², X³, X⁴, and X⁵ are defined in the same way as in the general formula (2)).
In addition, the present invention provides a flame-retardant resin obtained by reacting an amino group-containing phosphate compound represented by the following general formula (3)

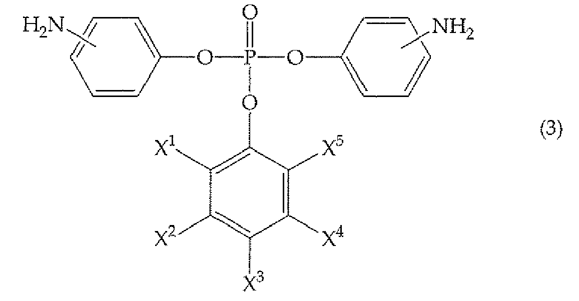

(where X¹, X², X³, X⁴, and X⁵ may be identical to or different from one another and each represent a hydrogen atom or an alkyl group having 1 to 3 carbon atoms) with a compound having one or two functional groups which react with an amino group in one molecule.
Further, the present invention provides a flame-retardant resin composition comprising an amino group-containing phosphate compound represented by the following general formula (3)

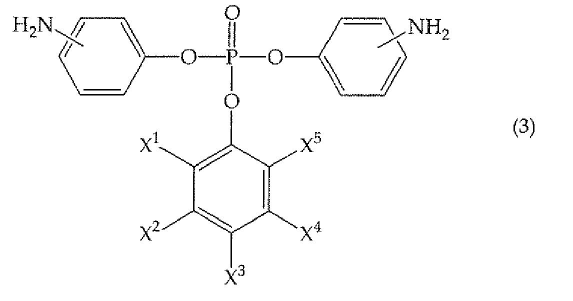

(where X¹, X², X³, X⁴, and X⁵ may be identical to or different from one another and each represent a hydrogen atom or an alkyl group having 1 to 3 carbon atoms) and a resin having two or more functional groups which react with an amino group in one molecule.

### Effects of the Invention

According to the present invention, a method for producing an amino group-containing phosphate compound, by which the compound can be easily synthesized through a one-step reaction can be provided.
In addition, a flame-retardant resin and a flame-retardant resin composition which give a cured product having excellent flame retardancy and electric characteristics and do not generate dioxin and phosphine when the flame-retardant resin and the flame-retardant resin composition are heated for molding or burned after use can be provided.

### Brief Description of the Drawings

Fig. 1 is a diagram showing results of ¹H-NMR of 3-APP.
Fig. 2 is a diagram showing results of ¹H-NMR of 4-APP.
Fig. 3 is a diagram showing results of ¹H-NMR of 3-ADMP.
Fig. 4 is a diagram showing results of ¹H-NMR of 4-ADMP.

### Best Mode for carrying out the Invention

### (Method for producing an amino group-containing phosphate compound)

The method for producing an amino group-containing phosphate compound of the present invention comprises reacting an aminophenol compound represented by a predetermined general formula with a dichlorophosphoric acid compound represented by a predetermined general formula in the presence of an inorganic basic compound in an aprotic organic solvent, to obtain an amino group-containing phosphate compound represented by a predetermined general formula.
The aminophenol compound used in the present invention is represented by the following general formula (1).

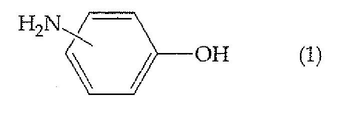

Examples of the aminophenol compound include o-aminophenol, m-aminophenol, and p-aminophenol. In addition, the aminophenol compound may have a substituent such as an alkyl group or an alkoxy group.

The dichlorophosphoric acid compound used in the present invention is represented by the following general formula (2).

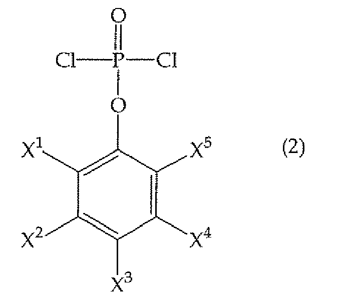

In the above formula, X¹, X², X³, X⁴, and X⁵ may be identical to or different from one another and each represent a hydrogen atom or an alkyl group having 1 to 3 carbon atoms.
Examples of the dichlorophosphoric acid compound include phenyl dichlorophosphate, 2-methylphenyl dichlorophosphate, 4-methylphenyl dichlorophosphate, 2,6-dimethylphenyl dichlorophosphate, 2,4,6-trimethylphenyl dichlorophosphate, 4-ethylphenyl dichlorophosphate, and 4-propylphenyl dichlorophosphate.

The ratio of the aminophenol compound and dichlorophosphoric acid compound is preferably 1.0 to 3.0 equivalents, and more preferably 1.1 to 1.6 equivalents of the aminophenol compound with respect to 1 equivalent of the chlorine atom of the dichlorophosphoric acid compound. If the amount of the aminophenol compound is less than 1 equivalent, desired yield of the amino group-containing phosphate compound may not be obtained. Reversely, if the amount of the aminophenol compound is more than 3 equivalents, there is too much amount unreacted aminophenol compound, and may not be economical.

Examples of the inorganic basic compound used in the present invention include hydroxides such as sodium hydroxide and potassium hydroxide and carbonates. Among them, alkali metal carbonates such as sodium carbonate and potassium carbonate are preferred because the alkali metal carbonate can increase reaction selectivity and decrease the amount of side reaction products.
The amount of the inorganic basic compound is used preferably 1.0 to 4.0 equivalents and more preferably 1.1 to 3.0 equivalents with respect to 1 equivalent of a chlorine atom of the dichlorophosphoric acid compound. If the amount of use of the inorganic basic compound is less than 1.0 equivalent, chlorine ions generated upon the reaction cannot be trapped sufficiently and the reaction system becomes acidic, whereby the reaction rate may decrease. Reversely, if the amount of use of the inorganic basic compound is more than 4.0 equivalents, there is too much extra inorganic basic compound, and may not be economical.

Examples of the aprotic organic solvent used in the present invention include: aromatic solvents such as benzene, toluene, and xylene; ether solvents such as diethyl ether, diisopropyl ether, dibutyl ether, tetrahydrofuran, and diethylene glycol dimethyl ether; and nitrile solvents such as acetonitrile. Among them, acetonitrile is preferred owing to its excellent ability to solve an aminophenol compound and a dichlorophosphoric acid compound.
The amount of the aprotic organic solvent used is not particularly limited as long as the amount is enough to dissolve the aminophenol compound and the dichlorophosphoric acid compound.

In the method for producing an amino group-containing phosphate compound of the present invention, the order of adding the above components is not particularly limited. However, from the viewpoint of increasing yield of the amino group-containing phosphate compound while suppressing side reactions, the following order is preferred: the inorganic basic compound is dissolved or dispersed in an aprotic organic solvent in which an aminophenol compound is dissolved, and a dichlorophosphoric acid compound is then added slowly.
The reaction temperature changes depending on the type, etc., of the aprotic organic solvent to be used, but in general, the temperature is preferably 40 to 100°C. If the reaction temperature is lower than 40°C, the desired reaction rate may not be obtained. Reversely, if the reaction temperature is more than 100°C, products by side reactions may increase.
The reaction time changes depending on the amount of use of the above components, but in general, the time is preferably 0.5 to 10 hours. If the reaction time is less than 0.5 hour, the aminophenol compound and dichlorophosphoric acid compound may not react with each other sufficiently. Reversely, a reaction time of more than 10 hours may cause a failure in obtaining desired yield due to side reactions and may not be preferred with a view to economical efficiency.

After the reaction, an amino group-containing phosphate compound can be isolated from the reaction product by a known method such as filtration or washing.
More specifically, by filtering the reaction product, impurities such as a catalyst and generated salts are removed from the reaction product. Next, after the filtrate is concentrated under vacuum, a solid component is deposited by adding a large amount of water to the filtrate. Then, an inorganic alkali such as sodium hydroxide, potassium hydroxide, sodium carbonate, or potassium carbonate is added and stirred sufficiently, whereby unreacted aminophenol contained in a solid component is solubilized in water. Then, after the solid component is filtered, the solid component is washed with water or the like, and dried, whereby an amino group-containing phosphate compound can be obtained.
The amino group-containing phosphate compound thus produced is represented by the following general formula (3).

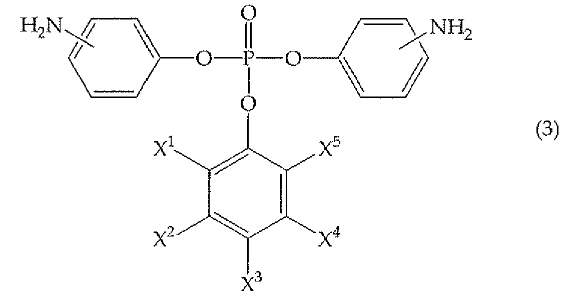

In the above formula, X¹, X², X³, X⁴, and X⁵ may be identical to or different from one another and each represent a hydrogen atom or an alkyl group having 1 to 3 carbon atoms.
The amino group-containing phosphate compound has no halogen atom in the molecule and does not generate dioxin or phosphine when heated for molding and burned after use, whereby the amino group-containing phosphate compound can be blended as a flame retardant in a resin composition.
Further, because there are two amino groups in the molecule, the amino group-containing phosphate compound can be reacted with a compound (resin) having a functional group which reacts with an amino group, with the result that the amino group-containing phosphate compound can be introduced in the compound (resin). That is, the amino group-containing phosphate compound can be used as a resin material. Here, when the amino group-containing phosphate compound has only one amino group in the molecule, the glass transition temperature of the cured product lowers. In addition, when the amino group-containing phosphate compound has three or more amino groups in the molecule, the crosslinking density of the cured product becomes higher, resulting in brittleness. The resin introducing the amino group-containing phosphate compound inside the resin barely causes hydrolysis, and does not cause bleed out in the cured product.
Among them, the amino group-containing phosphate compound represented by the following general formula (4) is excellent in flame retardancy, is thereby useful as a resin material and a flame retardant, and is also excellent in economic efficiency owing to high yield by the above production method.

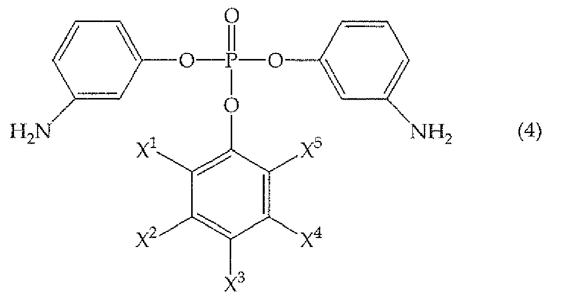

In the above general formula (4), X¹, X², X³, X⁴, and X⁵ may be identical to or different from one another and each represent a hydrogen atom or an alkyl group having 1 to 3 carbon atoms.
Further, the amino group-containing phosphate compound represented by the following general formula (5) is additionally excellent in flame retardancy, thereby useful as a resin material and a flame retardant.

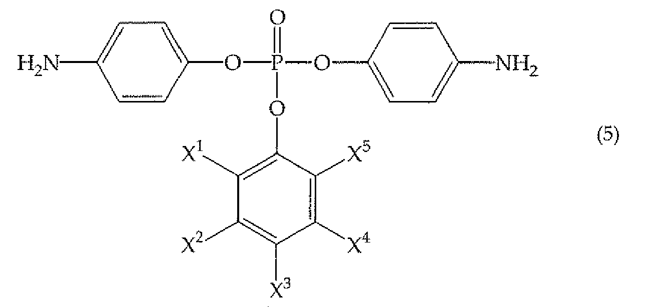

In the above general formula (5), X¹, X², X³, X⁴, and X⁵ may be identical to or different from one another and each represent a hydrogen atom or an alkyl group having 1 to 3 carbon atoms.
Among the amino group-containing phosphate compounds represented by the general formula (4), a compound represented by the following chemical formula (I) is preferable for use as a resin material and a flame retardant because the compound is additionally excellent in flame retardancy and the yield by the above production method is high. Further, a compound represented by the following chemical formula (II) is more preferable for use as a resin material and a flame retardant because the compound is excellent in hydrolysis resistance in addition to the above characteristics.

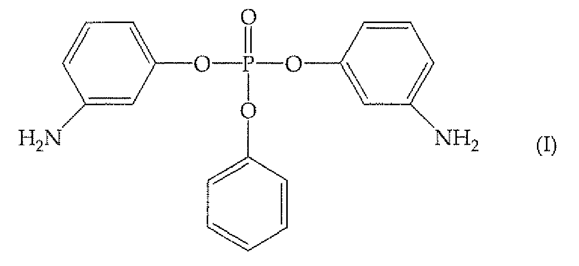

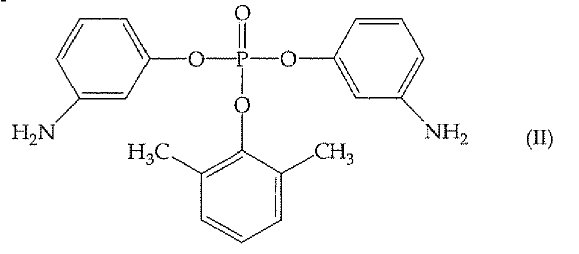

In addition, among the amino group-containing phosphate compounds represented by the general formula (5), a compound represented by the following chemical formula (III) is preferable for use as a resin material and a flame retardant because the compound is particularly excellent in flame retardancy. Further, a compound represented by the following chemical formula (IV) is more preferable for use as a resin material and a flame retardant because the compound is excellent in hydrolysis resistance in addition to the above characteristics.

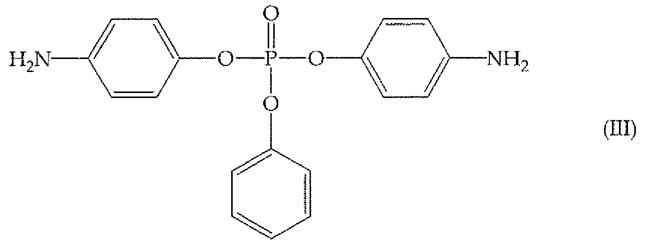

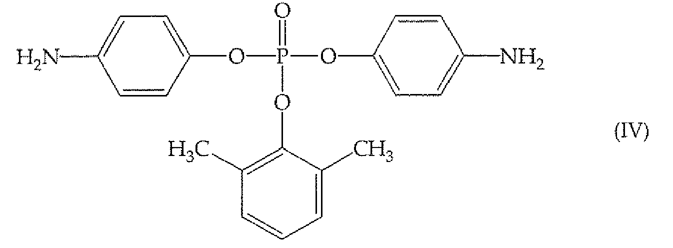

### (Flame-retardant resin)

The flame-retardant resin of the present invention is obtained by reacting the amino group-containing phosphate compound represented by the above general formula (3) with a compound having one or two functional groups which react with an amino group in one molecule. In the flame-retardant resin of the present invention, the amino group-containing phosphate compound is used as a resin material.
Here, the phrase "functional groups which react with an amino group" refers to a group such as an epoxy group, an isocyanate group, or a carboxyl group. Examples of the compound having the functional groups include epoxy compounds, diisocyanate compounds, and dicarboxylic acid compounds. Those compounds are resin materials. With those compounds, an epoxy resin, a urethane resin, a polyamide resin, or the like can be prepared. Among those resins, epoxy resins having high flame retardancy are more preferable.

When the flame-retardant resin is an epoxy resin, a flame-retardant resin can be produced by reacting an amino group-containing phosphate compound with an epoxy compound.
Examples of the epoxy compounds which can be used in the flame-retardant resin include epoxy compounds having one or two epoxy groups in one molecule such as phenyl glycidyl ether, butyl glycidyl ether, glycidyl methacrylate, bisphenol A-type epoxy resins, bisphenol F-type epoxy resins, bisphenol S-type epoxy resins, biphenyl-type epoxy resins, hydrogenated bisphenol A-type epoxy resins, and naphthalene-type epoxy resins. Those epoxy compounds may be used alone or in mixture.

The ratio of the amino group-containing phosphate compound to the epoxy compound having one or two epoxy groups in one molecule is preferably 0.10 to 0.45, and more preferably 0.15 to 0.40 in terms of an equivalent ratio of (amino group)/(epoxy group). If the equivalent ratio is less than 0.10, a large amount of epoxy compound does not react with the amino group-containing phosphate compound and a resin having desired flame retardancy may not be obtained. Reversely, if the equivalent ratio is more than 0.45, the molecular weight of the resin to be obtained becomes large, or resin terminals are changed to amino groups to thereby lead to high viscosity, which may make it difficult to handle the resin.

When the amino group-containing phosphate compound is reacted with an epoxy compound having one or two epoxy groups in one molecule, a diamine compound other than the amino group-containing phosphate compound can be used together from the viewpoint of adjusting physical properties. Examples of the diamine compounds which can be used together include hexamethylene diamine, trimethylhexamethylene diamine, 2-methylpentamethylene diamine, m-xylene diamine, isophorone diamine, bis(4-aminocyclohexyl)methane, diaminodiphenyl methane, and diaminodiphenyl sulfone. These diamine compounds may be used alone or in mixture. The amount of the diamine compound used may be set to such a range that the flame-retardant resin to be obtained has a phosphorous content of not less than 0.5 mass% in order not to impair flame retardancy.

Further, a solvent and a catalyst can be used in the above reaction. When a solvent and a catalyst are used, usable solvents are not particularly limited as long as the solvent is inactive to amino groups and epoxy groups. Examples of the solvent include tetrahydrofuran, ethyleneglycol dimethyl ether, diethyleneglycol dimethyl ether, ethyl acetate, butyl acetate, diethyleneglycol ethylether acetate, propyleneglycol methylether acetate, γ-butyrolactone, methyl ethyl ketone, methyl isobutyl ketone, benzene, toluene, and xylene. In addition, examples of usable catalysts include: tertiary amine compounds such as triethyl amine, dimethylcyclohexyl amine, N,N-dimethylpiperazine, benzyldimethyl amine, 2,4,6-tris(N,N-dimethylaminomethyl)phenol, and 1,8-diazabiscyclo(5,4,0)undecene-7; phosphine compounds such as triphenyl phosphine and tritolyl phosphine; onium salts such as tetrabutyl ammonium chloride, tetrabutyl ammonium bromide, decyltrimethyl ammonium chloride, tetraphenyl phosphonium chloride, and benzyltriphenyl phosphonium chloride; and imidazole compounds such as 2-methyhl imidazole, 2-undecyl imidazole, and 2-ethyl-4-methyl imidazole.

The amount of the solvent used is preferably 20 to 80 parts by mass with respect to a total of 100 parts by mass of the amino group-containing phosphate compound as a material of the flame-retardant resin, an epoxy compound, an optional diamine compound and a solvent. If the amount of the solvent used is less than 20 parts by mass, the material may not dissolve in the solvent. Reversely, if the amount of the solvent used is more than 80 parts by mass, desired reaction time may not be obtained. In addition, the amount of the catalyst used is preferably 0.1 to 10 parts by mass with respect to a total of 100 parts by mass of the amino group-containing phosphate compound as a material of the flame-retardant resin, an epoxy compound, an optional diamine compound, and a solvent. If the amount of the catalyst used is less than 0.1 part by mass, desired effects owing to addition of the catalyst may not be obtained. Reversely, if the amount of the catalyst used is more than 10 parts by mass, the reaction rate may become high and it may become difficult to control the reaction.
In addition, the reaction temperature is preferably 40 to 160°C in the above reaction. In addition, the reaction time is preferably 1 to 20 hours. If the reaction temperature is lower than 40°C or the reaction time is less than 1 hour, the reaction may not proceed sufficiently. Reversely, if the reaction temperature is higher than 160°C or the reaction time is more than 20 hours, gelation may be caused.

When the flame-retardant resin is a urethane resin, a flame-retardant resin can be produced by a reaction involving adding an amino group-containing phosphate compound upon a reaction of a diisocyanate compound and a diol compound. By a reaction involving adding the amino group-containing phosphate compound upon the reaction, a part of the diol compound can be replaced by the amino group-containing phosphate compound.
Examples of the diisocyanate compound that can be used in the flame-retardant resin include hexamethylene diisocyanate, isophorone diisocyanate, tolylene diisocyanate, xylylene diisocyanate, and 1,5-naphthalene diisocyanate. Those may be used alone or in mixture. In addition, examples of the diol compound include ethylene glycol, propylene glycol, 1,6-hexanediol, polyethylene glycol, polypropylene glycol, polytetramethylene glycol, and polyester polyol.
Those may be used alone or in mixture.

The ratio of the amino group-containing phosphate compound to the diisocyanate compound is preferably 0.10 to 0.50, and more preferably 0.15 to 0.40 in terms of an equivalent ratio of (amino group)/(isocyanate group). If the equivalent ratio is less than 0.10, a large amount of diisocyanate compound does not react with the amino group-containing phosphate compound and a resin having desired flame retardancy may not be obtained. Reversely, if the equivalent ratio is more than 0.50, the viscosity of the resin to be obtained may become high and it may become difficult to handle the resin.

Further, a solvent and a catalyst can be used in the above reaction. When a solvent and a catalyst are used, usable solvents are not particularly limited as long as the solvent is inactive to amino groups and isocyanate groups. Examples of the solvent include tetrahydrofuran, ethyleneglycol dimethyl ether, diethyleneglycol dimethyl ether, ethyl acetate, butyl acetate, diethyleneglycol ethylether acetate, propyleneglycol methylether acetate, γ-butyrolactone, methyl ethyl ketone, methyl isobutyl ketone, benzene, toluene, and xylene. In addition, examples of the usable catalyst include: tertiary amine compounds such as triethyl amine, dimethylcyclohexyl amine, N,N-dimethyl piperazine, benzyldimethyl amine, 2,4,6-tris(N,N-dimethylaminomethyl)phenol, and 1,8-diazabiscydo(5,4,0)undecene-7; and organic tin compounds such as dibutyl tin dilaurate and dioctyl tin dilaurate.

The amount of the solvent used is preferably 20 to 80 parts by mass with respect to a total of 100 parts by mass of the amino group-containing phosphate compound as a material of the flame-retardant resin, a diisocyanate compound, a diol compound, and a solvent. If the amount of the solvent used is less than 20 parts by mass, the material may not be dissolved in the solvent. Reversely, if the amount of the solvent used is more than 80 parts by mass, desired reaction time may not be obtained. In addition, the amount of the catalyst used is preferably 0.01 to 5 parts by mass and more preferably 0.02 to 3 parts by mass with respect to a total of 100 parts by mass of the amino group-containing phosphate compound as a material of the flame-retardant resin, a diisocyanate compound, a diol compound, and a solvent. If the amount of the catalyst used is less than 0.01 part by mass, desired effects owing to addition of the catalyst may not be obtained. Reversely, if the amount of the catalyst used is more than 5 parts by mass, the reaction rate may become high and it may become difficult to control the reaction.
In addition, the reaction temperature is preferably 40 to 120°C in the above reaction. In addition, the reaction time is preferably 1 to 20 hours. If the reaction temperature is lower than 40°C or the reaction time is less than 1 hour, the reaction may not proceed sufficiently. Reversely, if the reaction temperature is higher than 120°C or the reaction time is more than 20 hours, gelation may be caused.

When the flame-retardant resin is a polyamide resin, a flame-retardant resin can be produced as a result of a reaction involving adding an amino group-containing phosphate compound upon a reaction of a dicarboxylic acid compound and a diamine compound. By a reaction involving adding the amino group-containing phosphate compound upon the reaction, a part of the diamine compound can be replaced by the amino group-containing phosphate compound.
Examples of the dicarboxylic acid compound that can be used in the flame-retardant resin include: aliphatic dicarboxylic acids such as malonic acid, dimethyl maloate, succinic acid, glutaric acid, adipic acid, 2-methyl adipate, trimethyl adipate, pimelic acid, 2,2-dimethyl glutarate, 2,2-diethyl succinate, azelaic acid, sebacic acid, and suberic acid; alicyclic dicarboxylic acids such as 1,3-cyclopentane dicarboxylic acid and 1,4-cyclohexane dicarboxylic acid; and aromatic dicarboxylic acids such as isophthalic acid, 2,6-naphthalene dicarboxylic acid, 2,7-naphthalene dicarboxylic acid, 1,4-naphthalene dicarboxylic acid, 1,4-phenylene dioxydiacetic acid, 1,3-phenylene dioxydiacetic acid, diphenylmethane-4,4'-drcarboxylic acid, diphenylsulfoe-4,4'-dicarboxylic acid, and 4,4'-biphenyl dicarboxylic acid. Those may be used alone or in mixture.

In addition, examples of the diamine compound include: aliphatic diamines such as ethylene diamine, propylene diamine, 1,4-butane diamine, 1,6-hexane diamine, 1,8-octane diamine, 1,10-decane diamine, 1,12-dodecane diamine, 3-methyl-1,5-pentane diamine, 2,4,4-trimethyl-1,6-hexane diamine, and 5-methyl-1,9-nonane diamine; alicyclic diamines such as cyclohexane diamine, methylcyclohexane diamine, isophorone diamine; and aromatic diamines such as p-phenylene diamine, m-phenylene diamine, xylylene diamine, 4,4'-diaminodiphenyl methane, 4,4'-diaminadiphenyl sulfone, and 4,4'-diaminodiphenyl ether. Those may be used alone or in mixture.

The ratio of the amino group-containing phosphate compound to the dicarboxylic acid compound is preferably 0.10 to 0.50 and more preferably 0.15 to 0.40 in terms of an equivalent ratio of (amino group)/(carboxyl group). If the equivalent ratio is less than 0.10, a large amount of dicarboxylic acid compound does not react with the amino group-containing phosphate compound and a resin having desired flame retardancy may not be obtained. Reversely, if an equivalent ratio is more than 0.50, the viscosity of the resin to be obtained may become high and it may become difficult to handle the resin.

In addition, from the viewpoint of economical efficiency, it is preferred that the above reaction be performed by heat-melting the compounds without using a solvent in an inert gas atmosphere and at high temperature to cause a dehydration reaction.
In the above reaction, the reaction temperature is preferably 150 to 300°C. In addition, the reaction time is preferably 1 to 10 hours. If the reaction temperature is lower than 150°C or the reaction time is less than 1 hour, the reaction may not proceed sufficiently. Reversely, if the reaction temperature is higher than 300°C or the reaction time is more than 10 hours, the polyamide resin may deteriorate by heat and gelation may be caused.

The flame-retardant resin thus obtained has a phosphorous content of preferably 0.5 to 4.0 mass%, and more preferably 1.0 to 3.0 mass%, and hence is excellent in flame retardancy. If the phosphorous content is less than 0.5 mass%, desired flame retardancy may not be obtained. Reversely, if phosphorous content is more than 4.0 mass%, the viscosity of the resin may become high and workability or adherence to another material upon use of the resin may be impaired.

Further, the flame-retardant resin of the present invention can be formed into a flame-retardant resin composition by being combined with another component. Examples of the other component include, when an epoxy resin is used, for example, acid anhydrides, polyamine compounds, polyphenol compounds, and imidazole compounds, each of which serves as a curing agent.
In addition, from the viewpoint of adjusting viscosity and curing property of the resin composition and physical properties of the cured product, the following substances can be blended in the flame-retardant resin composition: thermosetting resins or thermoplastic resins other than the resin having one or two functional groups which react with an amino group in one molecule; reactive diluents; organic solvents; pigments; inorganic fillers such as calcium carbonate, barium sulfate, alumina, talc, silica, and glass powder; fibrous materials such as glass fiber, carbon fiber, and aramid fiber; various additives such as antioxidants, anti-settling agents, dispersants, leveling agents, and silane coupling agents; and inorganic flame retardants such as aluminum hydroxide, magnesium hydroxide, and expanded graphite. Among those components, the inorganic flame retardants are preferred because when the inorganic flame retardant is blended in a flame-retardant resin composition, a synergistic effect of flame retardancy owing to the amino group-containing phosphate compound and flame retardancy owing to the inorganic flame retardant can be obtained. In addition, the amount of those components blended is not particularly limited as long as the characteristics of the flame-retardant resin composition of the present invention are not impaired. The blending amount may be adjusted appropriately depending on intended use.

### (Flame-retardant resin composition)

The flame-retardant resin composition of the present invention comprises an amino group-containing phosphate compound represented by the general formula (3) and a resin having two or more functional groups which react with an amino group in one molecule. In the flame-retardant resin composition of the present invention, the amino group-containing phosphate compound is blended as a flame retardant.
Here, the phrase "functional groups which react with an amino group" refers to an epoxy group and an isocyanate group, for example. The functional group is a useful group for curing the resin composition. Examples of resins having the functional group include epoxy resins and urethane resins. Among them, epoxy resins are preferred in that epoxy resin is easily introduced into a curing system and has higher flame retardancy.
Examples of the epoxy resins that can be used in the flame-retardant resin composition include resins having two or more epoxy groups in one molecule such as bisphenol A-type epoxy resins, bisphenol F-type epoxy resins, bisphenol S-type epoxy resins, biphenyl-type epoxy resins, hydrogenated bisphenol A-type epoxy resins, naphthalene-type epoxy resins, phenol novolac-type epoxy resins, cresol novolac-type epoxy resins, phenolbiphenylene-type epoxy resins, naphthol aralkyl-type epoxy resins, naphthol novolac-type epoxy resins, triphenyl methane-type epoxy resins, and glucidylamine-type epoxy resins. Thet may be used alone or in mixture.

In addition, the flame-retardant resin composition of the present invention can comprise, from the viewpoint of adjusting physical properties of the cured product, a diamine compound other than the amino group-containing phosphate compound. Examples of the diamine compound include hexamethylene diamine, trimethylhexamethylene diamine, 2-methylpentamethylene diamine, m-xylene diamine, isophorone diamine, bis(4-aminocyclohexyl)methane, diaminodiphenyl methane, and diaminodiphenyl sulfone. These may be used alone or in mixture.
The amount of the diamine compound blended is not particularly limited as long as the flame-retardancy is not impaired. In general, the diamine compound is preferably blended in such a range that the phosphorous content of an organic component in the flame-retardant resin composition is 0.5 to 4.0 mass%. If the phosphorous content is less than 0.5 mass%, desired flame retardancy may not be obtained. Reversely, if the phosphorous content is more than 4.0 mass%, physical properties such as adherence to a substrate may be impaired.

The ratio of the amino group-containing phosphate compound and the optional diamine compound to an epoxy resin is preferably 0.25 to 0.75 and more preferably 0.40 to 0.60 in terms of an equivalent ratio of (amino group)/(epoxy group). If the equivalent ratio is less than 0.25 or the equivalent ratio is more than 0.75, the crosslinking density of the cured product is lowered and mechanical strength is impaired.

In addition, from the viewpoint of decreasing the viscosity, the flame-retardant resin composition of the present invention can comprise a solvent which is inactive to an amino group and a functional group of the resin. Examples of the solvent include ethyleneglycol dimethyl ether, diethyleneglycol dimethyl ether, ethyl acetate, butyl acetate, diethylene glycol ethylether acetate, propyleneglycol methylether acetate, γ-butyrolactone, methyl ethyl ketone, methyl isobutyl ketone, benzene, toluene, and xylene. The amount of the solvent blended is preferably 10 to 200 parts by mass with respect to a total of 100 parts by mass of the amino group-containing phosphate compound, an epoxy resin, and an optional diamine compound. If the amount of the solvent blended is less than 10 parts by mass, desired viscosity-reducing effect may not be obtained. Reversely, if the amount is more than 200 parts by mass, the viscosity of the resin composition is too low and dripping may be caused at the time of application thereof.

Further, from the viewpoint of adjusting viscosity and curing property of the resin composition and physical properties of the cured product, the flame-retardant resin composition of the present invention can comprise the following substances: thermosetting resins or thermoplastic resins other than the resin having two or more functional groups which react with an amino group in one molecule; reactive diluents; organic solvents; pigments; inorganic fillers such as calcium carbonate, barium sulfate, alumina, talc, silica, and glass powder; fibrous materials such as glass fiber, carbon fiber, and aramid fiber; various additives such as antioxidants, anti-settling agents, dispersants, leveling agents, and silane coupling agents; and inorganic flame retardants such as aluminum hydroxide, magnesium hydroxide, and expanded graphite. Among those components, the inorganic flame retardants are preferred because when the inorganic flame retardant is blended in a flame-retardant resin composition, a synergistic effect of flame retardancy owing to the amino group-containing phosphate compound and flame retardancy owing to the inorganic flame retardant can be obtained. In addition, the amount of those components blended is not particularly limited as long as the characteristics of the flame-retardant resin composition of the present invention are not impaired. The blending amount may be adjusted appropriately depending on intended use.
The method for producing the flame-retardant resin composition of the present invention is not particularly limited, and may include mixing the above components by conventionally known methods.

### Examples

Hereinafter, the present invention is described in detail by way of examples, but the present invention is not limited to the examples.
Characteristic evaluations of a cured product of the flame-retardant resin composition produced in the examples and comparative examples are performed by the following measurements.
(1) Evaluation of flame retardancy
   The evaluation of flame retardancy was performed by an oxygen index. The oxygen index was determined in accordance with JIS K 7201-2 "Test method of flame retardancy according to oxygen index". In this evaluation, the flame retardancy is evaluated to be higher as the oxygen index is larger.
(2) Tg
   Tg of the cured product was measured with a thermal analysis apparatus (manufactured by Seiko Instruments Inc.; EXSTAR DMS6100) by a dynamic mechanical analysis method (DMA). In this evaluation, the measurement temperature range was set from room temperature to 300°C, the rate of temperature increase was set to 4°C/minute, and the frequency was set to 1 Hz.
(3) Water adsorption after pressure cooker test (PCT)
   The water adsorption after PCT was determined using a test piece measuring 50 × 50 mm in accordance with JIS K 7209 "Method of determining water adsorption". As conditions for PCT in this evaluation, the temperature was set to 121°C (2 atm), the relative humidity was set to 100%, and the exposure time was set to 24 hours.
(4) Evaluations of electrical characteristics
   The evaluations of electrical characteristics were evaluated by insulation resistance values before and after PCT. The insulation resistance values before and after PCT were measured using a super insulating device (manufactured by Yokogawa Electric Corporation; 4329A) in accordance with JIS C 6481 "Test method for copper-clad laminates for printed wiring boards". As conditions for PCT in this evaluation, the temperature was set to 121°C (2 atm), the relative humidity was set to 100%, and the exposure time was set to 24 hours. Before and after the PCT treatment, the insulation resistance values were measured under conditions that the temperature was 22°C, the relative humidity was 65%, and the pressure rising was 500 V DC.

### [Synthesis of 2,6-dimethylphenyl dichlorophosphoric acid]

To a four-necked flask equipped with a stirring device, a dry nitrogen inlet, a thermometer, a dropping funnel, and a condenser were loaded 107.7 g (0.882 mol) of 2,6-dimethyl phenol, 80.7 ml (0.884 mol) of phosphorus oxychloride, and 1.5 g of anhydrous calcium chloride. The inside of the four-necked flask was made to be a dry nitrogen atmosphere. The contents were refluxed by heating for 15 hours while being stirred. The obtained reaction product was distilled off under vacuum, whereby 119.4 g (56.7% yield) of 2,6-dimethylphenyl dichlorophosphoric acid were obtained.

### [Preparation of amino group-containing phosphate compound]

### (Synthesis Example 1: preparation of bis(3-aminophenyl)phenyl phosphate (3-APP))

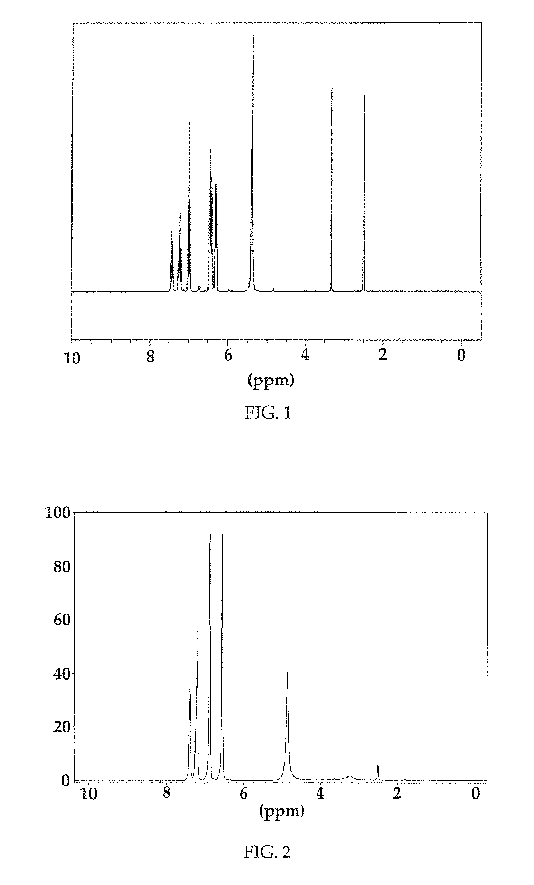

To a four-necked flask equipped with a stirring device, a dry nitrogen inlet, a thermometer, a dropping funnel, and a condenser were loaded 165 g (1.66 mol) of anhydrous potassium carbonate, a mixed solution of 700 g of acetonitrile subjected to dehydration and 101 g (0.926 mol) of m-aminophenol. The inside of the four-necked flask was made to be a dry nitrogen atmosphere. The temperature was increased to 60 to 65°C while the contents were stirred. After that, a mixed solution of 65.1 g (0.309 mol) of phenyl dichlorophosphoric acid and 60 g of acetonitrile subjected to dehydration were dropped slowly to the contents. After the termination of dropping, the contents were refluxed by heating for 1 hour and the reaction solution was cooled to room temperature. Produced salt and potassium carbonate were removed by filtration, and the remainder was washed with 50 ml of acetonitrile. The obtained filtrate was concentrated under vacuum and added to about 600 ml of water. Next, about 600 ml of 5% potassium carbonate solution were added to the filtrate and stirred for 30 minutes. Then, the deposited solid component was filtered and the remainder was washed well with water, and then the solid component was dried. The obtained solid component was recrystallized with methanol, whereby 88.5 g of 3-APP (80% yield) represented by the chemical formula (I) were obtained. The melting point of the obtained 3-APP was 139°C. In addition, Fig. 1 shows the measurement result of ¹H-NMR of the obtained 3-APP Here, the melting point was measured with BOETIUS PHMK 81/2969 manufactured by Kofler block and ¹H-NMR was measured with JNM-LA300 manufactured by JEOL Ltd. (in the following measurement of the melting point, the same apparatus was used).

### (Synthesis Example 2: preparation of bis(4-aminophenyl)phenyl phosphate (4-APP))

In the same manner as in synthesis of the 3-APP, 66.6 g of 4-APP (65% yield) represented by the chemical formula (III) were obtained except that p-aminophenol was used instead of m-aminophenol. The melting point of the obtained 4-APP was 123 to 124°C. In addition, Fig. 2 shows the measurement result of ¹H-NMR of the obtained 4-APP. Here, ¹H-NMR was measured with an AC-200 manufactured by the Bruker Corporation.

### (Synthesis Example 3: preparation of bis(3-aminophenyl)-2,6-dimethylphenyl phosphate (3-ADMP))

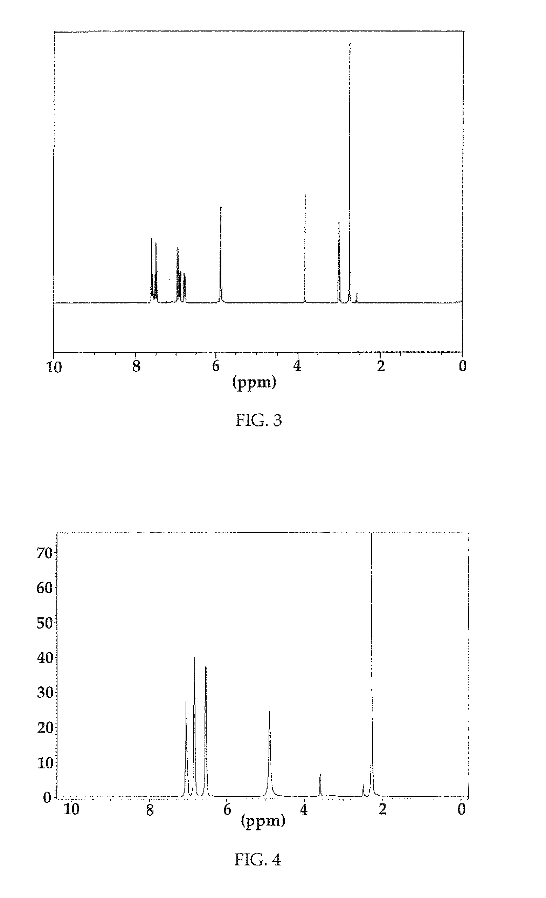

To a four-necked flask equipped with a stirring device, a dry nitrogen inlet, a thermometer, a dropping funnel, and a condenser were loaded 38.4 g (0.386 mol) of anhydrous potassium carbonate, 30.3 g (0.278 mol) of m-aminophenol, and 100 ml (78 g) of acetonitrile subjected to dehydration. The inside of the four-necked flask was made to be a dry nitrogen atmosphere. The temperature was increased to 75 to 80°C while the contents were stirred. After that, 16.6 g (0.069 mol) of 2,6-dimethylphenyl dichlorophosphoric acid were dropped slowly to the contents. After the termination of dropping, the contents were further refluxed by heating for 2 hours and the reaction solution was cooled to room temperature. Produced salt and potassium carbonate were removed by filtration, and the remainder was washed with 50 ml of acetonitrile. The obtained filtrate was concentrated under vacuum and added to about 600 ml of water. The deposited solid component was filtered and the remainder was put in a 5% sodium hydroxide solution, followed by stirring for 30 minutes. After that, the solid component was filtered, washed with water, and dried. The obtained solid component was recrystallized with toluene twice, whereby 12.0 g of 3-ADMP (45% yield) represented by the chemical formula (II) were obtained. The melting point of the obtained 3-ADMP was 153 to 154°C. In addition, Fig. 3 shows the measurement result of ¹H-NMR of the obtained 3-ADMP. Here, ¹H-NMR was measured with JNM-LA300 manufactured by JEOL Ltd.

### (Synthesis Example 4: preparation of bis(4-aminophenyl)-2,6-dimethylphenyl phosphate (4-ADMP))

In the same manner as in synthesis of the 3-ADMP, 7.0 g of 4-ADMP (26% yield) represented by the chemical formula (IV) was obtained except that p-aminophenol was used instead of m-aminophenol. The melting point of the obtained 4-ADMP was 126 to 128°C. In addition, Fig. 4 shows the measurement result of ¹H-NMR of the obtained 4-ADMP. Here, ¹H-NMR was measured with an AC-200 manufactured by the Bruker Corporation.

### [Preparation of flame-retardant resin]

### (Flame-retardant Resin A)

To a 500-ml separable flask equipped with a stirring device, a condenser, a nitrogen inlet, and a thermometer were loaded 77.0 g of bisphenol F-type epoxy resin YDF-170 [manufactured by Tohto Kasei Co., Ltd., epoxy equivalents of 168] (epoxy group: 0.46 equivalent), 23.0 g of 3-APP (amino group: 0.13 equivalent), and 150.0 g of methyl isobutyl ketone. The contents were subjected to a reaction for 5 hours while being stirred at 100°C in a nitrogen atmosphere. After that, the temperature was increased to 130°C and the contents were further subjected to a reaction for 5 hours. The epoxy equivalent was confirmed to be substantially constant by JIS K 7236 "Test method of epoxy equivalent in epoxy resin", and then Flame-retardant Resin A was obtained by standing to cool. The phosphorus content of the obtained Flame-retardant Resin A was 2.0 mass% by calculation with the use amount of 3-APP. In addition, the non-volatile content of the obtained Flame-retardant Resin A was 40.2 mass%.

### (Flame-retardant Resin B)

In the same manner as in the preparation method for Flame-retardant Resin A, flame-retardant Resin B was obtained except that 4-APP was used instead of 3-APP. The phosphorus content of the obtained Flame-retardant Resin B was 2.0 mass% by calculation with the use amount of 4-APP. In addition, a non-volatile content of the obtained Flame-retardant Resin B was 40.4 mass%.

### (Comparative resin)

To a 300-ml separable flask equipped with a stirring device, a condenser, a nitrogen inlet, and a thermometer were loaded 77.0 g of bisphenol F-type epoxy resin YDF-170 [manufactured by Tohto Kasei Co., Ltd., epoxy equivalents of 168] (epoxy group: 0.46 equivalent), 12.7 g of 4,4'-diamino diphenyl methane [manufactured by Tokyo Chemical Industry Co., Ltd.] (amino group: 0.13 equivalent), and 135 g of methyl isobutyl ketone. The contents were subjected to a reaction for 5 hours while being stirred at 100°C in a nitrogen atmosphere. After that, the temperature was increased to 130°C and the contents were further subjected to a reaction for 5 hours. The epoxy equivalent was confirmed to be substantially constant by JIS K 7236 "Test method of epoxy equivalent in epoxy resin", and then a comparative resin was obtained by standing to cool. The non-volatile content of the obtained comparative resin was 40.0 mass%.

### [Preparation of flame-retardant resin composition]

### (Examples 1 to 6)

Flame-retardant resin compositions of Examples 1 to 6 were prepared by mixing respective components according to the blending ratios shown in Table 1.

### (Comparative Examples 1 to 3)

Resin compositions of Comparative Examples 1 to 3 were prepared by mixing respective components according to the blending ratios shown in Table 1. Note that, in the resin composition of Comparative Example 3, PX-200 (aromatic condensed phosphate, manufactured by DAIHACHI CHEMICAL INDUSTRY CO., LTD.) an additive-type phosphorous flame retardant, was used as a flame retardant.

### [Preparation of cured product]

A glass cloth mat measuring 300 mm × 300 mm × 180 µm (Nitto Boseki Co., Ltd., WE18K105) was impregnated with the flame-retardant resin compositions of Examples 1 to 6 and the resin compositions of Comparative Examples 1 to 3 and dried in an oven at 90°C for 60 minutes. After that, the dried resultant was cured by heating at 190°C for 90 minutes under a pressure of 1 MPa. Then, the resultant was post-cured at 190°C for 3 hours, whereby a cured product was obtained.
The cured products obtained from the flame-retardant resin compositions of Examples 1 to 6 and the resin compositions of Comparative Examples 1 to 3 were evaluated for the various properties above. Table 1 shows the results.

**Table 1**

| | | Composition (mass%) | | | | | | | | |
|---|---|---|---|---|---|---|---|---|---|---|
| Component | | Example 1 | Example 2 | Example 3 | Example 4 | Example 5 | Example 6 | Comparative Example 1 | Comparative Example 2 | Comparative Example 3 |
| Flame-retardant Resin A (non-volatile content: 40.2 mass%) | | 245.0 | - | - | - | - | - | - | - | - |
| Flame-retardant Resin B (non-volatile content: 40.4 mass%) | | - | 248.0 | - | - | - | - | - | - | - |
| Comparative resin (non-volatile content: 40.0 mass%) | | - | - | - | - | - | - | 250.0 | - | - |
| Bisphenol F-type epoxy resin ¹⁾ (epoxy group) | | - | - | 69.4 (0.413 equivalent) | 69.4 (0.413 equivalent) | 68.0 (0.405 equivalent) | 68.0 (0.405 equivalent) | - | 77.3 (0.460 equivalent) | 60.1 (0.358 equivalent) |
| 3-APP (Amino group) | | - | - | 22.9 (0.129 equivalent) | - | - | - | - | - | - |
| 4-APP (Amino group) | | - | - | - | 22.9 (0.129 equivalent) | - | - | - | - | - |
| 3-ADWP (Amino group) | | - | - | - | - | 24.7 (0.129 equivalent) | - | - | - | - |
| 4-ADMP (Amino group) | | - | - | - | - | - | 24.7 (0.129 equivalent) | - | - | - |
| 4,4-diaminodiphenyl methane (Amino group) | | | | 7.7 (0.08 equivalent) | 7.7 (0.08 equivalent) | 7.3 (0.07 equivalent) | 7.3 (0.07 equivalent) | - | 22.2 (0.229 equivalent) | 17.7 (0.179 equivalent) |
| Aromatic condensed phosphate compound ²⁾ | | - | - | - | - | - | - | - | - | 22.2 |
| 1-cyanoethyl-2-undecyl imidazole ³⁾ | | 1.0 | 1.0 | - | - | - | - | 1.0 | - | - |
| Methyl ethyl ketone | | - | - | 66.0 | 66.0 | 66.0 | - | - | 66.0 | 66.0 |
| Phosphorous content in non-volatile component (mass%) | | 2.0 | 2.0 | 2.0 | 2.0 | 2.0 | 2.0 | 0.0 | 0.0 | 2.0 |
| Frame retardancy (oxygen index) | | 27.6 | 33.0 | 27.0 | 32.4 | 27.4 | 32.8 | 19.6 | 19.8 | 28.2 |
| Tg (°C) | | 127 | 138 | 124 | 136 | 130 | 140 | 123 | 127 | 91 |
| Water adsorption after PCT (%) | | 0.55 | 0.72 | 0.59 | 0.75 | 0.40 | 0.45 | 0.50 | 0.57 | 0.46 |
| Insulation resistance value | Before PCT | 2.5×10¹⁵ | 3.0×10¹⁵ | 2.2×10¹⁵ | 2.0×10¹⁵ | 2.2×10¹⁵ | 2.0×10¹⁵ | 2.1×10¹⁵ | 1.7×10¹⁵ | 3.9×10¹⁵ |
| (Ω) | After PCT | 1.5×10¹⁴ | 4.0×10¹⁴ | 1.0×10¹⁴ | 2.5×10¹⁴ | 1.0×10¹⁵ | 1.5×10¹⁵ | 8.0×10¹⁴ | 1.9×10¹⁵ | 1.6×10¹⁴ |

| | | | | | | | | | | |
|---|---|---|---|---|---|---|---|---|---|---|
| 1) YDF-170 manufactured by Tohto Kasei Co., Ltd., 2) PX-200 manufactured by DAIHACHI CHEMICAL INDUSTRY CO., LTD. 3) C₁₁Z-CN manufactured by Shikoku Chemicals Corporation. | | | | | | | | | | |

As shown in Table 1, cured products obtained from the flame-retardant resin compositions of Examples 1 to 6 each had high oxygen index and excellent flame retardancy. In addition, cured products obtained from the flame-retardant resin compositions of Examples 1 to 6 each had high Tg and no problem occurred (lowering of Tg of cured product) when an additive-type phosphate was blended. Further, cured products obtained from the flame-retardant resin compositions of Examples 1 to 6 each had favorable electric characteristics after PCT. On the other hand, cured products obtained from the resin compositions of Comparative Examples 1 to 3 each had a low oxygen index and bad flame retardancy or low Tg.
From the foregoing, with the method for producing the amino group-containing phosphate compound of the present invention, an amino group-containing phosphate compound can be easily produced through a one-step reaction. In addition, the flame-retardant resin and flame-retardant resin composition of the present invention does not generate dioxin and phosphine upon burning and are capable of providing a cured product having excellent flame retardancy and electric characteristics.

## Claims

1. A method for producing an amino group-containing phosphate compound, comprising reacting an aminophenol compound represented by the following general formula (1) 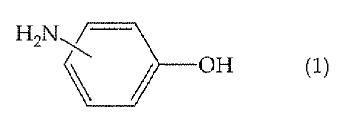 with a dichlorophosphoric acid compound represented by the following general formula (2) 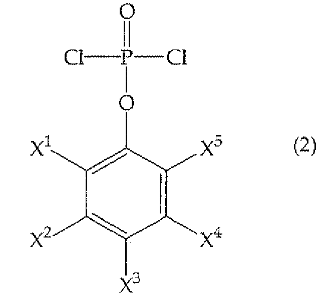 (where X¹, X², X³, X⁴, and X⁵ may be identical to or different from one another and each represent a hydrogen atom or an alkyl group having 1 to 3 carbon atoms) in the presence of an inorganic basic compound in an aprotic organic solvent, to obtain an amino group-containing phosphate compound represented by the following general formula (3) 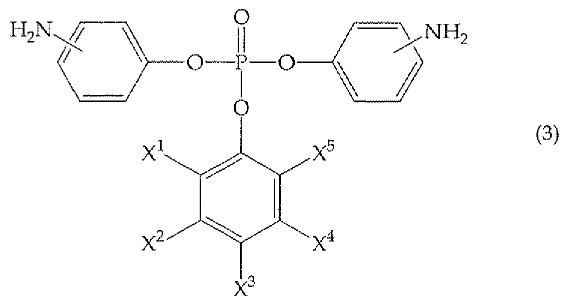 (where X¹, X², X³, X⁴, and X⁵ are defined in the same way as in the general formula (2)).

2. The method for producing an amino group-containing phosphate according to claim 1, wherein the inorganic basic compound is an alkali metal carbonate.

3. The method for producing an amino group-containing phosphate according to claim 1 or 2, wherein the aprotic organic solvent is acetonitrile.

4. A flame-retardant resin obtained by reacting an amino group-containing phosphate compound represented by the following general formula (3) 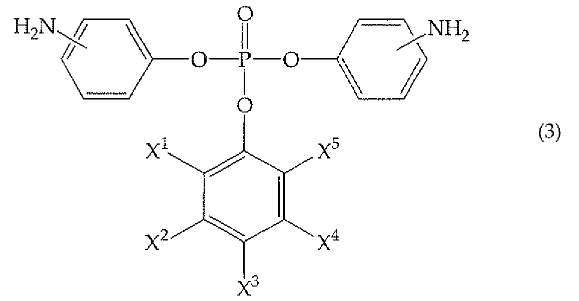 (where X¹, X², X³, X⁴, and X⁵ may be identical to or different from one another and each represent a hydrogen atom or an alkyl group having 1 to 3 carbon atoms) with a compound having one or two functional groups which react with an amino group in one molecule.

5. The flame-retardant resin according to claim 4, wherein the amino group-containing phosphate compound is represented by the following general formula (4) 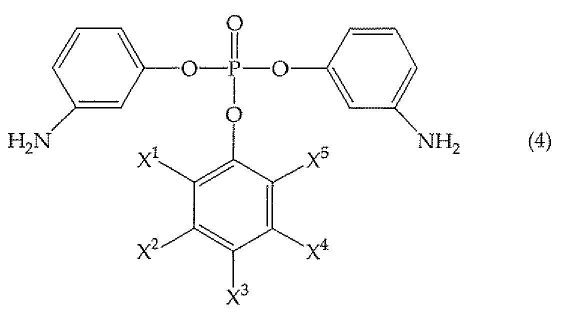 or the following general formula (5) 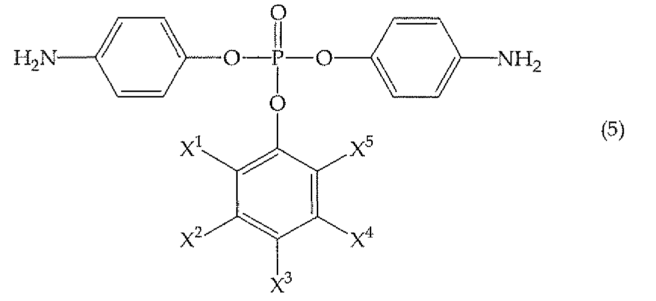 where X¹, X², X³, X⁴, and X⁵ may be identical to or different from one another and each represent a hydrogen atom or an alkyl group having 1 to 3 carbon atoms.

6. The flame-retardant resin according to claim 4 or 5, wherein the amino group-containing phosphate compound is a compound represented by one of the following chemical formulas: 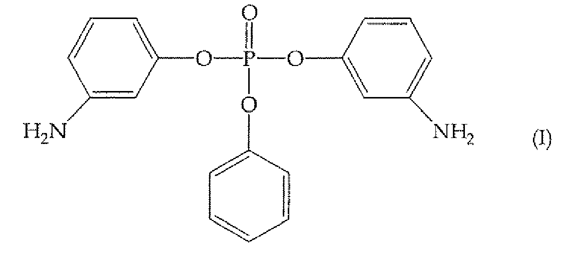 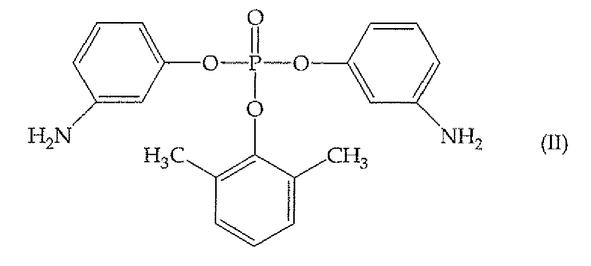 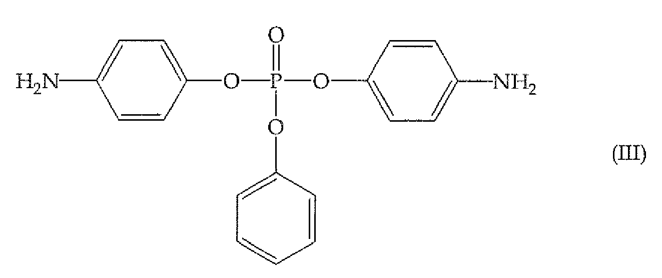 or

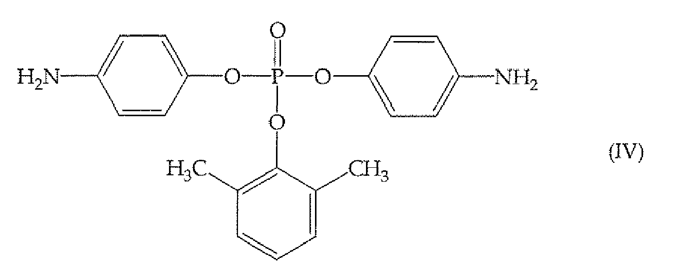

7. The flame-retardant resin according to any one of claims 4 to 6, wherein the functional groups which react with an amino group are epoxy groups.

8. The flame-retardant resin according to any one of claims 4 to 7, wherein the compound having one or two functional groups which reacts with an amino group in one molecule is selected from the group consisting of phenyl glycidyl ether, butyl glycidyl ether, glycidyl methacrylate, bisphenol A-type epoxy resins, bisphenol F-type epoxy resins, bisphenol S-type epoxy resins, biphenyl-type epoxy resins, hydrogenated bisphenol A-type epoxy resins, naphthalene-type epoxy resins, and mixtures thereof.

9. A flame-retardant resin composition comprising the flame-retardant resin according to any one of claims 4 to 8.

10. A flame-retardant resin composition, comprising:
an amino group-containing phosphate compound represented by the following general formula (3) 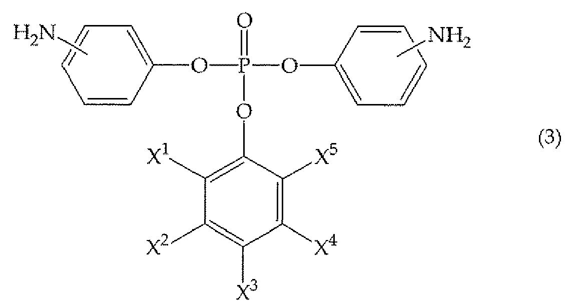 where X¹, X², X³, X⁴, and X⁵ may be identical to or different from one another and each represent a hydrogen atom or an alkyl group having 1 to 3 carbon atoms; and
a resin having two or more functional groups which react with an amino group in one molecule.

11. The flame-retardant resin composition according to claim 10, wherein the amino group-containing phosphate compound is represented by the following general formula (4) 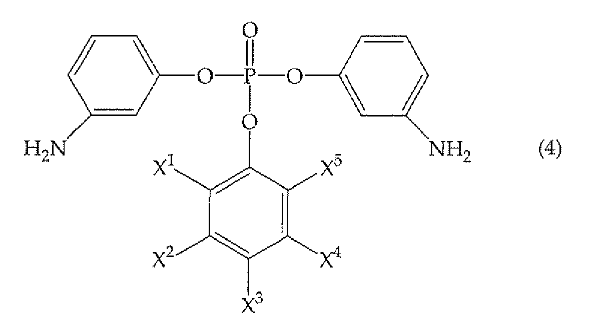 or the following general formula (5) 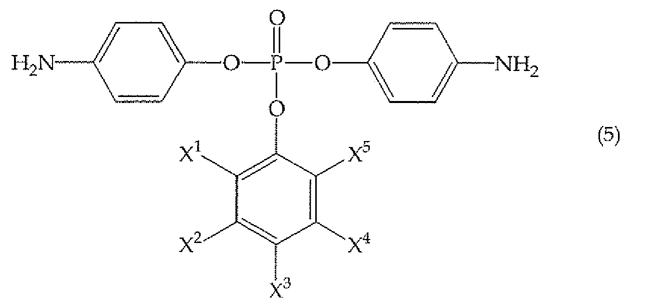 where X¹, X², X³, X⁴, and X⁵ may be identical to or different from one another and each represent a hydrogen atom or an alkyl group having 1 to 3 carbon atoms.

12. The flame-retardant resin composition according to claim 10 or 11, wherein the amino group-containing phosphate compound is a compound represented by the following one of chemical formulas: 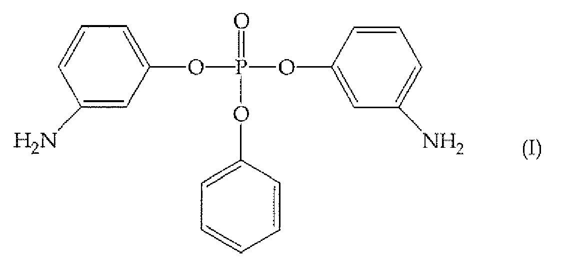 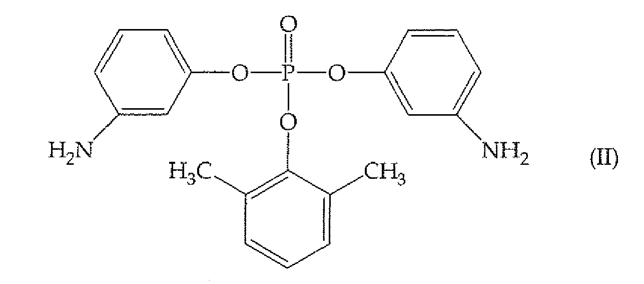 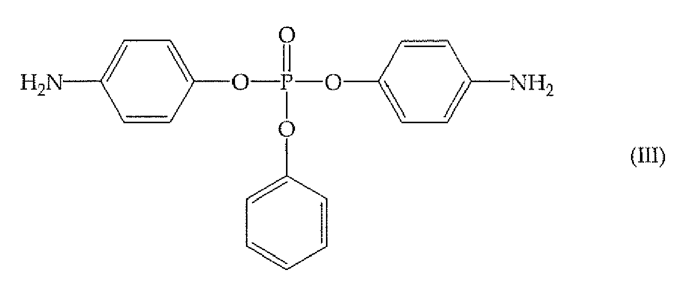 or

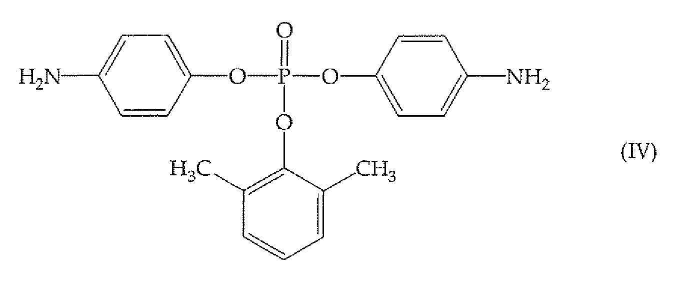

13. The flame-retardant resin composition according to any one of claims 10 to 12, wherein the functional groups which react with an amino group are epoxy groups.

14. The flame-retardant resin composition according to any one of claims 10 to 13, wherein the resin having two or more functional groups which react with an amino group in one molecule is selected from the group consisting of bisphenol A-type epoxy resins, bisphenol F-type epoxy resins, bisphenol S-type epoxy resins, biphenyl-type epoxy resins, hydrogenated bisphenol A-type epoxy resins, naphthalene-type epoxy resins, phenol novolac-type epoxy resins, cresol novolac-type epoxy resins, phenolbiphenylene-type epoxy resins, naphthol aralkyl-type epoxy resins, naphthol novolac-type epoxy resins, triphenyl methane-type epoxy resins, glucidylamine-type epoxy resins, and mixtures thereof.
